(19) Europäisches Patentamt

European Patent Office

Office européen des brevets

(11) **EP 1 103 839 B1**

(12) **FASCICULE DE BREVET EUROPEEN**

(45) Date de publication et mention
de la délivrance du brevet:
**17.11.2004   Bulletin 2004/47**

(51) Int Cl.⁷: **G02F 1/13363**, G02B 5/30

(21) Numéro de dépôt: **01100823.2**

(22) Date de dépôt: **22.06.1993**

(54) **Dispositif d'affichage à cristal liquide nématique en hélice**

Verdrillt-nematische Flüssigkristallanzeigevorrichtung

Twisted nematic liquid crystal display device

(84) Etats contractants désignés:
**DE ES GB IT**

(30) Priorité:  **26.06.1992  FR 9207831**

(43) Date de publication de la demande:
**30.05.2001   Bulletin 2001/22**

(62) Numéro(s) de document de la (des) demande(s)
initiale(s) en application de l'article 76 CBE:
**93401592.6 / 0 576 342**

(73) Titulaire: **THOMSON multimedia**
**92100 Boulogne Billancourt (FR)**

(72) Inventeur: **Haas, Gunther**
**92648 Boulogne Cedex (FR)**

(74) Mandataire: **Ruellan-Lemonnier, Brigitte**
**THOMSON multimedia,**
**46 quai A. Le Gallo**
**92648 Boulogne Cédex (FR)**

(56) Documents cités:
WO-A-90/16005                WO-A-92/17813
DE-A- 3 911 620

• **PATENT ABSTRACTS OF JAPAN vol. 016, no. 060 (P-1312), 14 février 1992 (1992-02-14) -& JP 03 257424 A (FUJITSU LTD), 15 novembre 1991 (1991-11-15)**
• **PATENT ABSTRACTS OF JAPAN vol. 016, no. 365 (P-1397), 6 août 1992 (1992-08-06) -& JP 04 113301 A (ASAHI CHEM IND CO LTD), 14 avril 1992 (1992-04-14)**
• **PATENT ABSTRACTS OF JAPAN vol. 016, no. 377 (P-1401), 12 août 1992 (1992-08-12) -& JP 04 120512 A (ASAHI CHEM IND CO LTD), 21 avril 1992 (1992-04-21)**

## Description

La présente invention se rapporte aux dispositifs électro-optiques à commande électrique permettant l'affichage d'images, directement sur un panneau modulant la lumière par transmission, ou indirectement par projection sur un écran. L'invention concerne plus particulièrement les dispositifs mettant en oeuvre un cristal liquide disposé entre deux polariseurs croisés et présentant, en l'absence de champ électrique modulateur, une structure nématique en hélice. Dans cette configuration, on peut s'arranger pour que la transparence décroisse lorsqu'on soumet la cellule à cristal liquide à une tension électrique croissante. L'image visualisée présente un défaut d'uniformité qui dépend des conditions angulaires d'observation. Pour diminuer cet inconvénient, il a déjà été proposé, notamment EP-A-0 350 383, d'associer à la couche de cristal liquide un ou plusieurs films compensateurs faits d'un milieu optique biréfringent uniaxe, l'ensemble étant situé entre les deux polariseurs croisés. Cette technique permet d'obtenir un rapport de contraste plus homogène dans un angle d'observation plus ouvert. Il a aussi été proposé dans les documents WO90/16005 et DE-A-3 911620 d'utiliser un film constitué par une couche de cristal liquide discotique. La présente invention propose un perfectionnement particulièrement intéressant avec les couches de cristal liquide de type TN.

L'invention a donc pour objet un dispositif d'affichage à commande électrique mettant en oeuvre une couche de cristal liquide nématique en hélice de type TN disposée entre deux polariseurs, des moyens compensateurs uniaxes à biréfringence négative étant associés à ladite couche à l'intérieur de la cavité optique formée par lesdits polariseurs, caractérisé en ce que les moyens compensateurs sont réalisés par une couche de cristal liquide discotique à pré-inclinaison homogène.

L'invention sera mieux comprise au moyen de la description ci-après et des figures annexées, parmi lesquelles :

la figure 1 est une vue isométrique d'un dispositif d'affichage selon l'invention,
la figure 2 est une vue de profil du dispositif de la figure 1,
la figure 3 est un diagramme explicatif du fonctionnement de la cellule à cristal liquide de la figure 1,
la figure 4 est un diagramme précisant la réponse angulaire de la cellule à cristal liquide de la figure 1, en l'absence de moyen compensateur,
la figure 5 est une vue de profil (a) et une vue frontale (b) d'un exemple de réalisation de l'invention,
la figure 6 est une vue de profil (a) et une vue frontale (b) d'un exemple non-revendiqué,
la figure 7 schématise un dispositif d'affichage à projection de type connu,
les figures 8 et 9 illustrent la dépendance angulaire du rapport de contraste avec des éléments compensateurs ayant l'axe optique légèrement incliné, soit par rapport aux faces de la couche de cristal liquide, soit par rapport à leur normale.

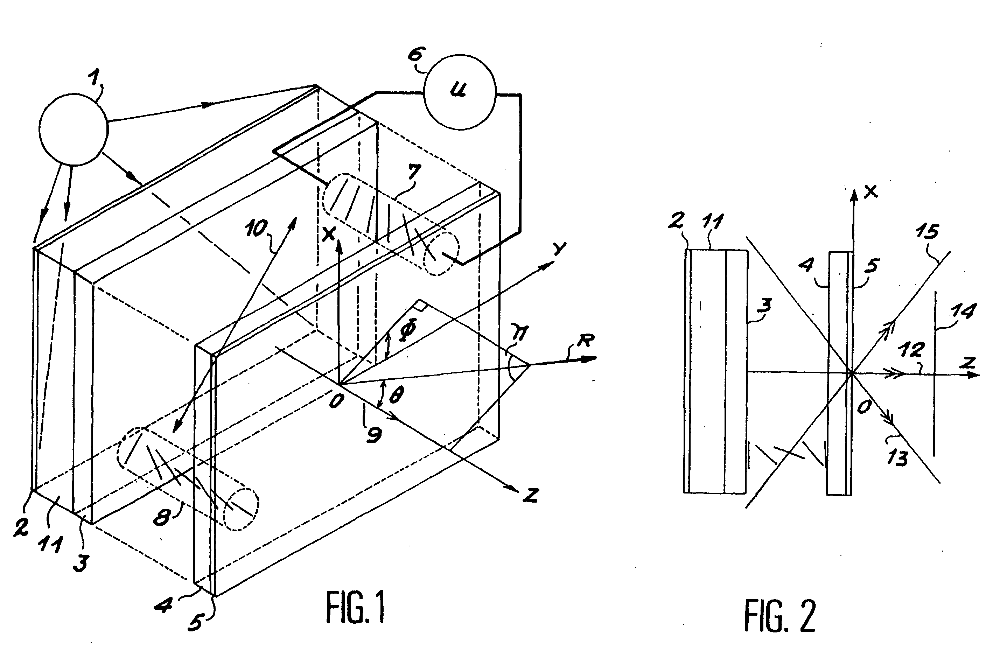

Sur la figure 1, on peut voir deux lames support transparentes 3 et 4 qui délimitent une cavité à faces parallèles traitées au moyen de surfactant et par un procédé d'alignement, afin de communiquer aux molécules d'un cristal liquide nématique qui remplit cette cavité des orientations particulières. La zone cylindrique 7 illustre cette orientation moléculaire en hélice en l'absence de champ électrique de commande. A proximité immédiate de la lame 3, les molécules sont orientées dans la direction 10 qui est inclinée à 45 degrés par rapport aux axes X et Y. A proximité immédiate de la lame 4, les molécules sont orientées dans la direction 9 orthogonale à la direction 10. A mi-distance des faces internes des lames 3 et 4, les molécules de cristal liquide sont orientées selon l'axe X que l'on suppose correspondre à la direction verticale du dispositif d'affichage. Les lames 3 et 4 sont équipées d'électrodes transparentes reliées à un générateur électrique 6, afin de créer un champ électrique de direction Z et d'intensité proportionnelle à la tension électrique u délivrée par le générateur 6. Ce champ électrique de commande modifie l'orientation moléculaire en hélice comme illustré dans la zone cylindrique 8. En l'absence de champ de commande, l'orientation moléculaire est symétrique et capable de faire tourner de 90 degrés la polarisation rectiligne d'un rayonnement lumineux pénétrant dans la couche de cristal liquide par l'une de ses faces principales et émergeant par son autre face principale. Si l'ensemble 3-4 est placé entre un polariseur 2 et un analyseur 5 de telle façon que ces éléments imposent les directions 10 et 9, on voit que l'orientation en hélice 7 permettra à la lumière produite par la source lumineuse 1 de traverser le dispositif d'affichage le mieux possible, ceci en l'absence de champ électrique de commande, ce qui caractérise un état « ouvert ». Au contraire, l'action d'un champ électrique de commande aura pour effet de diminuer le pouvoir rotatoire de la couche de cristal liquide et du même coup les polariseurs croisés 2 et 5 auront sur la lumière une action obturatrice correspondant à un état « fermé ».

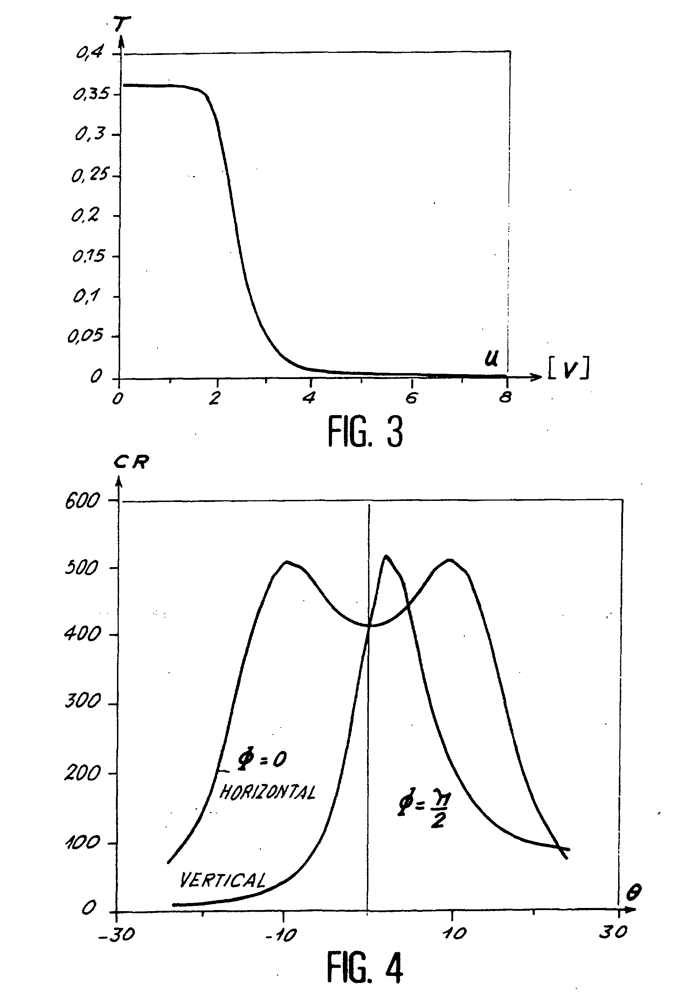

Entre le polariseur 2 et la lame transparente 3, ou bien entre la lame 4 et l'analyseur 5, on a prévu, conformément à l'invention, d'ajouter un élément compensateur 11 qui, à titre d'exemple non limitatif, peut revêtir la forme d'une lame à faces parallèles taillée dans un milieu biréfringent uniaxe. Sans cet élément, le dispositif des figures 1 et 2 est de type connu et ses propriétés électro-optiques sont décrites par les diagrammes des figures 3 et 4. A titre d'exemple, les caractéristiques d'un dispositif d'affichage à cristal liquide nématique en hélice sont :

Cristal liquide de type MERCK ZLI-3347
Différence de marche optique $(n_e-n_o)d$ : 476 nm

Angle d'hélice : 90°

Pré-inclinaison des molécules de cristal liquide en l'absence de champ électrique : 2°

Polariseurs de type SANRITZ LLC2 8218S

Tension d'état « ouvert » : 1,74 Volt

Tension d'état «fermé» : 5,40 Volt

Longueur d'onde de la lumière : 550 nm.

La figure 3 exprime le facteur de transmission T en fonction de la tension de commande u. La figure 4 exprime par deux courbes les propriétés angulaires, c'est-à-dire la variation du rapport de contraste CR avec la direction du rayon lumineux R. En se reportant à la figure 1, on voit que les coordonnées angulaires du rayon lumineux sont $\Phi$ et $\theta$. La coordonnée $\Phi$ donne l'orientation du plan $\pi$ qui contient R et Z. La coordonnée $\theta$ fixe l'orientation de R par rapport à Z.

La courbe $\Phi = 0$ montre comment varie le rapport de contraste lors d'un balayage angulaire horizontale, tandis que la courbe $\Phi = \pi/2$ concerne un balayage angulaire vertical. On note que le résultat est symétrique pour un balayage horizontal, alors qu'il est asymétrique et déporté à droite pour un balayage vertical. L'asymétrie et le déport à droite se comprennent aisément en examinant la vue de profil sur la figure 2. On voit que les molécules basculent dans la direction OZ en tournant sur elles-mêmes dan le sens déterminé par l'angle de pré-inclinaison, au lieu de rester sensiblement parallèles aux faces de la couche de cristal liquide. Dans ces conditions, lors d'un balayage angulaire vertical, comme indiqué par la flèche 14, la biréfringence résiduelle de la couche ne fait qu'augmenter, ce qui explique le déport sur la figure 4.

Les courbes des figures 3 et 4 sont établies dans l'hypothèse d'un élément 11 n'introduisant pas de compensation par biréfringence.

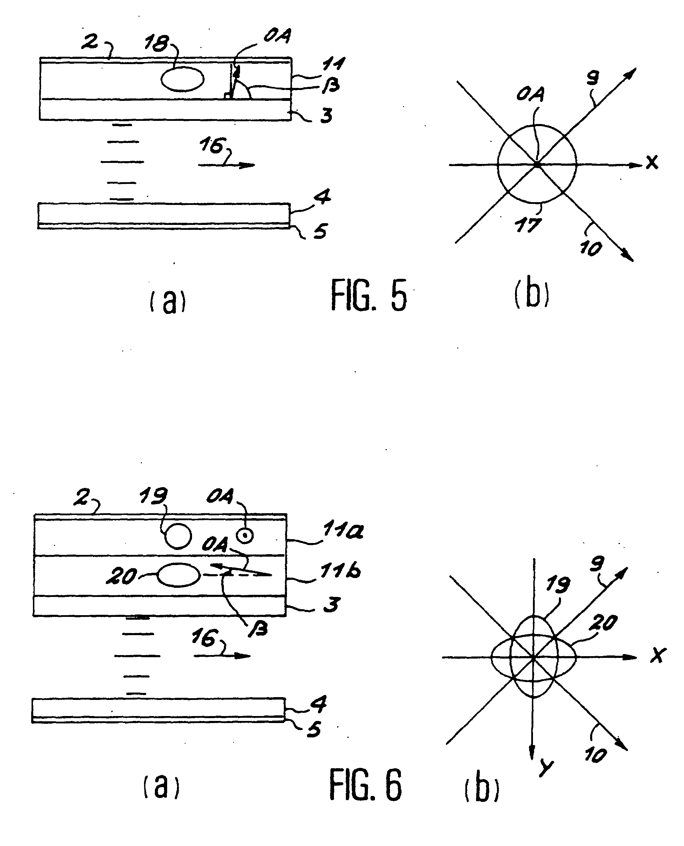

Selon un exemple de réalisation de l'invention illustrée à la figure 5, le moyen compensateur 11 prend la forme d'un milieu uniaxe de biréfringence négative dont l'axe optique OA est dans le plan XZ et fait avec la face de la couche de cristal liquide un angle ($\beta$) compris entre 75 et 90°. La flèche 16 indique la pré-inclinaison moléculaire, En (b), on voit que la section 17 de l'ellipsoïde des indices est circulaire pour une propagation parallèle à l'axe OA. Pour chiffrer les performances d'un dispositif d'affichage, on peut se référer à un rapport de contraste intégré ICR dont l'expression mathématique est la suivante :

$$ICR(\propto) = \frac{\int d\Phi \int_o^\propto T(\theta,\Phi,U_{off})}{\int d\Phi \int_o^\propto T(\theta,\Phi,U_{on})}$$

où : $\propto$ est le demi-angle d'ouverture d'un cône d'intégration

et $T(\theta,\Phi,U_{off})$ et $T(\theta,\Phi,U_{on})$ sont les facteurs de transmission pour les états « ouvert » et « fermé ».

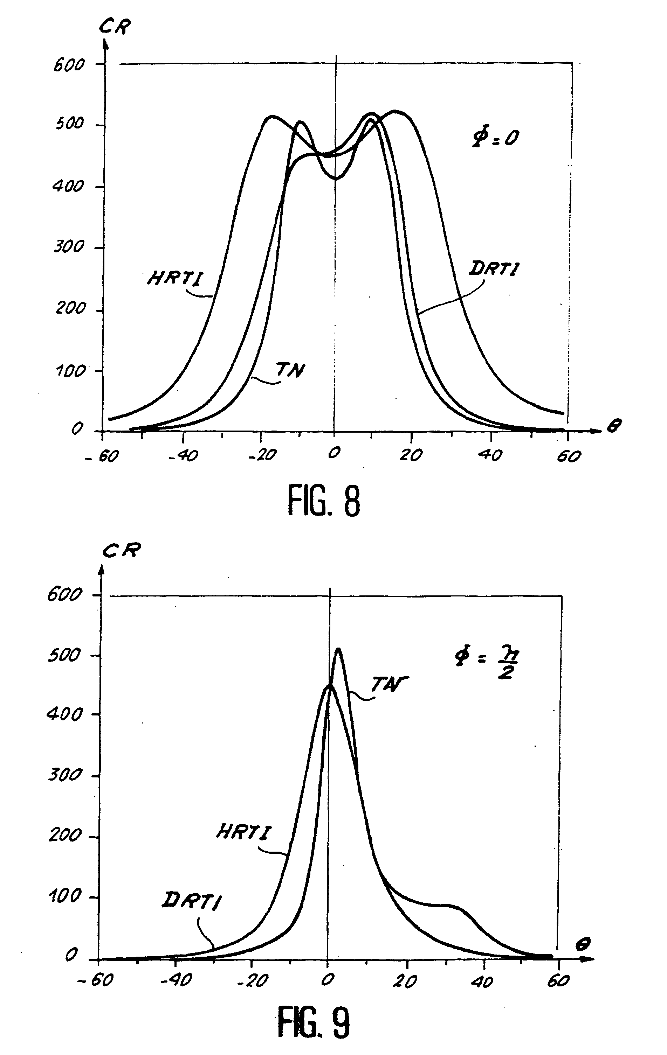

En adoptant pour le compensateur une différence de marche de - 390 nm et un angle de l'axe optique de 83°, la grandeur ICR (20°) vaut 187, alors que pour une cellule à cristal liquide sans compensateur, on obtient une valeur de 77. Un tel compensateur peut être réalisé par une couche de cristal liquide discotique à pré-inclinaison homogène. Les courbes référencées HRTI sur les figures 8 et 9 se rapportent à cette variante de réalisation. On constate sur la figure 9 que le déport de la courbe HRTI est annulé, alors qu'il apparaît sur la courbe TN qui représente la variation angulaire d'une cellule à cristal liquide sans compensateur 11. La figure 8 montre que dans la direction horizontale, le compensateur 11 élargit la répartition angulaire du rapport de contraste CR.

La compensation illustrée par la figure 5 utilise un seul élément 11 à biréfringence négative qui présente des propriétés isotropes pour une onde lumineuse se propageant suivant l'axe optique. Les courbes DRTI des figures 8 et 9 donnent pour comparaison des indications sur la répartition angulaire du rapport de contraste CR lorsque la compensation est réalisée par deux éléments compensateurs à biréfringence positive, comme représenté par exemple sur la figure 6.

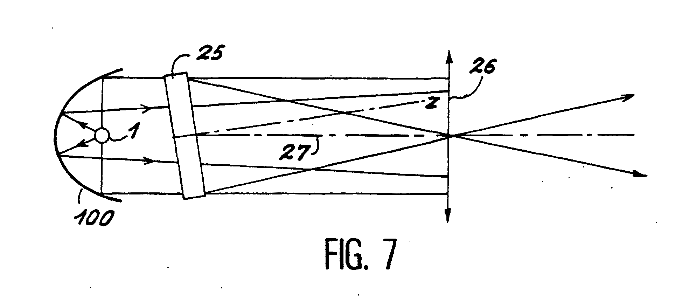

Sur la figure 7, on a représenté un système à projection comprenant un dispositif d'affichage à cristal liquide nématique en hélice 25 associé à une source lumineuse 1 munie d'un réflecteur 100. La projection sur écran est assurée par un objectif 26 et compte tenu du déport du maximum de contraste observé en direction verticale pour un dispositif d'affichage non compensé, on voit qu'il est nécessaire d'incliner le dispositif 25 par rapport à l'axe optique 27, afin que l'éclairement soit optimal dans la direction de l'axe optique. On pourrait aussi déporter le dispositif 25 par rapport à l'axe optique de l'objectif pour atteindre le même résultat. Dans les deux cas, on constate que ces mesures ne permettent pas d'utiliser au mieux l'objectif de projection puisque le dispositif 25 n'est pas correctement positionné du point de vue de l'imagerie optique. On a déjà proposé ci-dessus une solution à ce problème qui consiste à utiliser des milieux compensateurs uniaxes à biréfringence négative ayant l'axe optique légèrement incliné par rapport à la normale aux faces de la couche de cristal liquide.

D'après la description qui précède, on voit que le fait d'associer un compensateur à biréfringence négative uniaxe à une couche de cristal liquide nématique en hélice apporte dans tous les cas une meilleure répartition angulaire horizontale du rapport de contraste. En inclinant de manière appropriée l'axe optique du milieu biréfringent constituant le compensateur par rapport aux faces de la couche de cristal liquide, on peut en outre éliminer le déport de la répartition angulaire verticale.

Les améliorations apportées aux dispositifs à cristal liquide nématique en hélice sont d'ordre optique. Elles s'appliquent notamment aux dispositifs d'affichage à matrice passive ou active tels qu'on les utilise comme écrans d'ordinateur, ou pour les applications écran plat en télévision. On peut également appliquer ces perfectionnements aux systèmes à projection, ainsi qu'aux viseurs pour caméra vidéo et caméscopes.

## Revendications

1. Dispositif d'affichage à commande électrique mettant en oeuvre une couche de cristal liquide nématique en hélice de type TN disposée entre deux polariseurs (2, 5), des moyens compensateurs (11) uniaxes à biréfringence négative étant associés à ladite couche à l'intérieur de la cavité optique formée par lesdits polariseurs, **caractérisé en ce que** les moyens compensateurs sont réalisés par une couche de cristal liquide discotique (18) à pré-inclinaison homogène (β).

2. Dispositif selon la revendication 1, **caractérisé en ce que** l'orientation moléculaire (7) de ladite couche, en l'absence de tension électrique de commande, est ajustée pour faire tourner de 90° la polarisation rectiligne d'une onde lumineuse qui la traverse dans la direction normale (Z) par rapport à ses faces principales, lesdits polariseurs (2,5) ayant des polarisations croisées respectivement alignées avec la polarisation rectiligne de l'onde lumineuse au niveau desdites faces principales.

3. Dispositif selon les revendications 1 et 2, **caractérisé en ce que** l'axe optique des moyens compensateurs présentent une inclinaison par rapport à la normale (Z) aux faces principales de ladite couche, l'angle d'inclinaison étant > 0° par rapport à la normale (Z') de manière à éliminer le déport de la répartition angulaire verticale.

4. Dispositif selon la revendication 3, **caractérisé en ce que** l'angle d'inclinaison est > 0° et < 15°.

5. Système de projection d'images sur un écran comprenant un objectif de projection, **caractérisé en ce qu'**il comprend un dispositif d'affichage selon l'une quelconque des revendications précédentes et **en ce que** ledit dispositif d'affichage comprend une couche de cristal liquide ayant ses faces principales perpendiculaires et centrées par rapport à l'axe optique dudit objectif de projection.

## Patentansprüche

1. Wiedergabevorrichtung mit elektrischer Steuerung und Anwendung einer gedrehten nematischen Flüssigkristallschicht vom Typ TN, die zwischen zwei Polarisatoren (2, 5) liegt, wobei uniaxiale Kompensationsmittel (11) mit negativer Doppelbrechung der Schicht im Inneren der durch die Polarisatoren gebildeten optischen Kammer angeordnet sind,
   **dadurch gekennzeichnet, daß**
   die Kompensationsmittel durch eine diskotische Flüssigkristallschicht (18) mit einer homogenen Vorneigung (β) gebildet sind.

2. Vorrichtung nach Anspruch 1, **dadurch gekennzeichnet, daß** die molekulare Orientierung (7) der Schicht bei Abwesenheit der elektrischen Steuerspannung
   so eingestellt ist, daß eine Drehung um 90° der geradlinigen Polarisation einer Lichtwelle entsteht, die sie in der Richtung der Normalen (Z) relativ zu ihren Hauptflächen durchdringt, und daß die Polarisatoren (2, 5) gekreuzte Polarisationen aufweisen, die jeweils mit der geradlinigen Polarisation der Lichtwelle bei den Hauptflächen ausgerichtet sind.

3. Vorrichtung nach Ansprüchen 1 und 2, **dadurch gekennzeichnet, daß** die optische Achse der Kompensationsmittel eine Neigung gegenüber der Normalen (Z) auf den Hauptflächen der Schicht aufweisen und dass der Neigungswinkel >0° gegenüber der Normalen (Z') ist, derart, dass der Versatz der vertikalen winkelförmigen Verteilung eliminiert wird.

4. Vorrichtung nach Anspruch 3, **dadurch gekennzeichnet, daß** der Neigungswinkel >0° und <15° beträgt.

5. System zur Projektion von Bildern auf einen Schirm mit einem Projektionsobjektiv, **dadurch gekennzeichnet, daß** es eine Wiedergabevorrichtung nach einem der vorangehenden Ansprüche enthält und daß die Wiedergabe-vorrichtung eine Flüssigkristallschicht mit Hauptflächen enthält, die senkrecht und zentriert zu der optischen Achse des Projektionsobjektivs liegen.

## Claims

1. An electrically controlled display device implementing a layer of TN type twisted nematic liquid crystal placed between two polarizers (2,5), uniaxial compensating means (11) with negative birefringence being associated with said layer within the optical cavity formed by said polarizers, **characterized in that** the compensating means are made of a discotic liquid crystal layer (18) with homogeneous pre-inclination (β).

2. A device according to claim 1, **characterized in that** the molecular orientation (7) of said layer, when there is no electrical control voltage, is adjusted to bring about a 90° rotation of the rectilinear polarization of a light wave that goes through it in the direction that is normal (Z) with respect to its main faces, said polarizers (2,5) having crossed polarizations respectively aligned with the rectilinear polarization of said light wave at said main faces.

3. A device according to claims 1 and 2, **characterized in that** the optical axis of said compensating means have an inclination with respect to the normal (Z) to the main faces of said layer, the inclination angle being > 0° with respect to the normal (Z') in order to eliminate the deport of the vertical angular repartition.

4. A device according to claim 3, **characterized in that** the inclination angle is comprised between 0° and 15°.

5. A system for the projection of images on a screen comprising a projection lens, **characterized in that** it comprises a display device according to either of preceding claims, and **in that** said display device includes a liquid crystal layer having its main faces perpendicular and centered with respect to the optical axis of said projection lens.

FIG.1

FIG. 2

EP 1 103 839 B1

FIG. 3

FIG. 4

(a)     FIG. 5     (b)

(a)     FIG. 6     (b)

FIG. 7

FIG. 8

FIG. 9